# EUROPEAN PATENT SPECIFICATION

(11) **EP 2 023 569 B1**
(45) Date of publication and mention of the grant of the patent: **12.05.2010**
(21) Application number: 07290990.6
(22) Date of filing: 09.08.2007
(51) Int. Cl.: H04L 29/06, G06F 21/00

(54) **Input and output validation for protecting database servers**
Eingabe- und Ausgabe-Validierung zum Schutze von Datenbank-Servern
Validation d'entrées et de sorties pour protéger des serveurs de base de données

(43) Date of publication of application: 11.02.2009
(73) Proprietor: SAP AG, 69190 Walldorf (DE)
(72) Inventor: Benameur, Azzedine, 84330 Caromb (FR); El Khoury, Paul, 06560 Valbonne (FR)
(74) Representative: Müller-Boré & Partner Patentanwälte

(56) References cited:
- EP-A- 1 296 252
- WO-A-03/009174
- ROESCH M ET AL: "SNORT Users Manual 2.6.0" INTERNET CITATION, [Online] 20 June 2006 (2006-06-20), XP002458462 Retrieved from the Internet: URL:http://www.mirrors.wiretapped.net/secu rity/network-intrusion-detection/snort/> [retrieved on 2007-11-14]
- HALFOND W ET AL: "A Classification of SQL Injection Attacks and Prevention Techniques" PROCEEDINGS OF THE IEEE INTERNATIONAL SYMPOSIUM ON SECURE SOFTWARE ENGINEERING (ISSSE), March 2006 (2006-03), XP007903777
- SHER ET AL: "A vulnerabilities analysis and corresponding middleware security extensions for securing NGN applications" COMPUTER NETWORKS, ELSEVIER SCIENCE PUBLISHERS B.V., AMSTERDAM, NL, vol. 51, no. 16, 23 June 2007 (2007-06-23), pages 4697-4709, XP022248171 ISSN: 1389-1286

## Description

### Technical Field

The description is directed generally to web services and in particular to a computer implemented method, system, and computer program product for input validation and output validation to prevent SQL injections.

### Background

Web services, and in particular SOA (Service Oriented Architecture) web services are a rapidly growing design option expressing a perspective of a software architecture that defines loosely coupled applications or services. A SOA web service does not rely on any implementation details. In SOA web services, communication between one or more clients and at least one server may be performed through XML-based messages, in particular SOAP messages. The messages may be prone to attacks. Those attacks may lead to unauthorized access to information and/or data of a resource (e.g. a database) a service or web service provides access to.
One kind of attacks may be based on modifications of SOAP messages, also referred to as XML rewriting attacks. Solutions to such attacks avoid a user to modify a message. Beyond XML rewriting attacks, SQL injection is a technique to attack a service or application that exploits a security vulnerability occurring in the database layer of the service or application. Hence, it might be necessary to provide a mechanism suitable for SOA web services that will prevent web services from SQL injection attacks and prevent an attacker to gain understanding of the inner structure of a web service.

Document WO 03/009174 A1 discloses an apparatus for protection of database objects from unwanted access, particularly from external connections via a firewall. The apparatus comprises a data packet parsing unit for parsing a data packet to find database operation commands in the packet, and an enforcement unit for applying enforcement rules to the data packet, thereby to protect respective database objects. The apparatus has an additional layer of protection in conjunction with a firewall to protect internal data.

Document EP 1 296 252 A1 discloses a method for filtering data in a network, wherein a syntax of a content is checked against a predetermined set of syntax rules wherein a warning message might be output depending on the check result. The filtering may be applied to either data being received by a network or data being transmitted from the network.

The paper by Halfond et al., "A Classification of SQL injection Attacks and Prevention Techniques", Symposium on Secure Software Engineering (ISSSE), March 2006, XP007903777, discloses an overview of different types of SQL injection attacks and on different types of input validation and filtering methods which aim to prevent such attacks. While this document briefly mentions the fact that database error messages can in principle be used by hackers in order to gain valuable information about the underlying system and database structures, it solely concentrates on input validation techniques and stresses the importance of defensive coding on the database input side, presumably in order to avoid error messages being generated in the first place.

### Summary

In one general aspect, a computer-implemented method for input validation and output validation to prevent SQL injections may comprise:
receiving at a service (or server) a request message from a client over a network (140), wherein the service is located on a server;
providing a handler at the server;
checking the request message at the handler using a first method (or procedure or process or logic) before sending the request message to the service;
   and
checking a response message at the handler using the first method before sending the response message to the client.

Accordingly, a web service may be provided such as a SOA web service where communication between one and more clients (e.g. another server or an end-user computer) and at least one server for accessing a service located on the server may be performed through messages such as XML-based messages such as SOAP messages. In one implementation, a resource such as a database (e.g. a relational database based on SQL) is connected to the service. That is, in case a client requests data or information from the service, the service delegates the request to the underlying database, which computes or evaluates a corresponding result and sends the result back to the service. The request as well as the corresponding result computed or evaluated by the database are exchanged between the client and the service using a message protocol (e.g. SOAP). Thus, to communicate a database query request from a client to a service and a corresponding response back from the service to the client, the database query is embedded in a message protocol. Unfortunately, in case a programming or modeling language (e.g. a database query language such as SQL) is embedded inside another programming or modeling language (e.g. a message protocol such as SOAP), the exchanged data or information may be vulnerable, e.g. to SQL injections. To prevent a communication between a client and a service from such attacks, a handler (e.g. Axis handler or a RPC handler such as JAX-RPC handler) is implemented on the server inside the container of the (web) service. Basically, the handler may perform two tasks: The handler checks or validates a request message from a client in view of unwanted data (e.g. different kinds or types of SQL injections) before sending the request message to the service. This tasks may be referred to as input validation. The handler also checks or validates a response message from the service in view of unwanted data (e.g. SQL-related exceptions which would provide inside to the implementation of the service and/or the underlying database). This task may be referred to as output validation.

By providing a server-side handler which performs input validation and output validation on (substantially) all messages exchanged between a client and a service, a (web) service or application is prevented from attacks such as SQL injection attacks and moreover, prevents an attacker to gain understanding or information of the inner structure of the (web) service or application. The inner structure of a service may, for example, refer to its implementation details, to how the service communicates with at least one underlying database, and to how the database is designed and implemented. Furthermore, the handler performs input validation and output validation transparently. Hence, developers need no longer take care about filtering of different kinds of possible injections (e.g. filtering special characters, e.g. characters of a character set such as ASCII which do not belong to alphabetic or numeric characters and which are not intended in a request) and release developers from writing such checks at software level. Due to filtering both, request messages and response messages, i.e. due to perform input validation and output validation, frequently contacted services are secured.

Beyond, although there might be always a trade off between computation time and security in a distributed system such as a SOA web service, a handler implemented on the server together with the service enables a more efficient (i.e. less time consuming) secure implementation.

Furthermore, checking the request message at the handler may further comprise:
if the request message is free from injected data, passing the request message to the service; or
throwing a request fault message.

By checking the request message, the handler checks or determines whether the request message is free from injected data. Accordingly, the handler checks or determines whether the request message comprises at least one input parameter which comprises at least one special character, a combined query expression, and/or a more complicated or nested query expression. If this is not the case, the request message is valid, i.e. not injected and passed to the service. Otherwise, the request message is not valid, i.e. injected. In this case, the handler throws a fault message rather than passing the request message to the service. Hence, the faulty or not valid request message is not processed by the service.

Furthermore, checking the response message at the handler may comprise:
if the response message is free from exception data, passing it to the client; or throwing a response fault message.

By checking the response message, the handler checks or determines whether the response message is free from exception data. Accordingly, the handler checks or determines whether the response message comprise at least one data element which is related to an error or an exception (e.g. a SQL exception) thrown by the database before or while evaluating the corresponding request. If this is not the case, the response message is allowable and passed to the client having requested the corresponding information and/or data. Otherwise, the handler throws a fault message rather than passing the response message to the client.

Furthermore, throwing the request fault message and/or the response fault message may comprise:
checking the request fault message and/or the response fault message at the handler using a second method (or procedure or process or logic);
generating a customized fault message; and
sending the customized fault message to the client.

By checking the (request or response) fault message and possibly generating a customized fault message to be passed to the client, the handler ensures that no inside information and/or data regarding the inner structure of the service and/or the implementation of the underlying database is passed to the client such that an attacker may not guess what is happening at the database layer nor how a query is generated from a request message in the service before being send to the underlying database to be evaluated. Filtering or checking fault messages may belong to output validation. Accordingly, a customized fault message is generated which is free of exception data such as SQL exceptions. Hence, generating a customized fault message may comprise: freeing the request fault message and/or the response fault message from exception data.

According to another aspect, checking the request message at the handler may comprise checking simple attacks; checking complex attacks; and checking compound attacks.

By distinguishing possible attacks such as SQL injections into differently complex attacks, the computation time of input validation may be decreased. For example, if an attacker has specified an attack comprising special characters, this attack can already be detected by performing a simple check.

Assuming that an input parameter of a request (message) expects a value of type string as input, then simple, complex, and compound attacks may be characterized as follows:
Checking simple attacks (e.g. simple SQL injections) may comprise checking whether the input parameter comprises special characters, e.g. characters of a character set such as ASCII which do not belong to alphabetic or numeric characters and which are not expected or allowed in the request and/or which would make the request being syntactically incorrect.
Checking complex attacks (e.g. complex SQL injections) may comprise checking whether the input parameter is specified by a combined query expression, e.g. using "AND" and/or "OR" statements.
Checking compound attacks (e.g. compound SQL injections) may comprise checking whether the input parameter is specified by a more complicated or nested query expression, e.g. nesting a "SELECT ... WHERE ... FROM "statement or a "CREATE" statement into another "SELECT ... WHERE ... FROM "statement.
Checking attacks such as SQL injections may further comprise type checking of input parameters and/or verifying data formats and/or regular expressions predefined for an input parameter of a request (message).

According to yet another aspect, the method may further comprise: filtering the request fault message and/or the response fault message in the second method of the handler and inside the first method.

In another general aspect there is provided a computer-program product comprising computer readable instructions, which when loaded and run in a computer system and/or computer network system, cause the computer system and/or the computer network system to perform a method as described.

In yet another general aspect, a computer system for input validation and output validation to prevent SQL injections may comprise:
a client and a server, the server comprising a service and a handler,
   wherein the client is operable to send a request message to the service over a network; and
   wherein the handler is operable to:
   check the request message using a first method before sending the request message to the service; and
   check a response message using the first method before sending the response message to the client.

The subject matter described in this specification can be implemented as a method or as a system or using computer program products, tangibly embodied in information carriers, such as a CD-ROM, a DVD-ROM, a semiconductor memory, and a hard disk. Such computer program products may cause a data processing apparatus to conduct one or more operations described in this specification.

In addition, the subject matter described in this specification can also be implemented as a system including a processor and a memory coupled to the processor. The memory may encode one or more programs that cause the processor to perform one or more of the method acts described in this specification. Further the subject matter described in this specification can be implemented using various MRI machines.

Details of one or more implementations are set forth in the accompanying exemplary drawings and exemplary description below. Other features will be apparent from the description and drawings, and from the claims.

### Technical Terms

Following technical terms are widely used throughout the description. The terms may refer to but are not limited to the subsequently given explanations.

### Web Service

According to the W3C (World Wide Web Consortium), a web service may be defined as a software system or computer system designed to support interoperable machine to machine interaction over a network such as the Internet or the World Wide Web (WWW). Although a possible definition given by the W3C encompasses many different systems, in common usage the term web service may refer to a system wherein clients and servers may communicate over a network using XML (eXtensible Mark-up Language) messages that follow the SOAP (Simple Object Access Protocol) standard. Common in both the field and the terminology may be the assumption that there may be provided a machine readable description of operations supported by a (web) server, i.e. a description of a Web service provided by a server. The description may be given in the language WSDL (Web Service Description Language). In other words, web services my be applications that publish their interfaces and allow remote call over the network from one or more clients. The interfaces may be published in a WSDL file. web services may be used in different ways: RPC (Remote Procedure Call), SOA (Service Orient Architecture), and others.

### SOA (Service Oriented Architecture)

Web services may also be used to implement an architecture according to the so-called service-orient architecture (SOA) concepts. A SOA may be a multi-layered client-server architecture where the basic unit of communication is a message rather than an operation. SOA may also be referred to as message-oriented services. SOA may express a perspective of software architecture that defines the use of loosely coupled (service) applications or programs. In distributed systems such as SOAs, a service such as a Web service may provide access to data of a resource possibly stored in a data storage device such as a database from a user (e.g. an end user or another service). Resources on a network in a SOA environment may be made available as independent services that may be accessed without knowledge of their underlying platform implementation. The architecture may be implemented using a wide range of technologies, including RPC, DCOM, CORBA, Web service or WCF. A possible definition of a SOA has been provided by OASIS (the Organization for the Advancement of Structured Information Standards): "A paradigm for organizing and utilizing distributed capabilities that may be under the control of different ownership domains. It provides a uniform means to offer, discover, interact with and use capabilities to produce desired effects consistent with measurable preconditions and expectations."

### SOAP (Simple Object Access Protocol)

SOAP is a protocol for exchanging XML-based messages over (computer) networks, possibly using HTTP/HTTPS. In other words, SOAP is an XML-based communication protocol and encoding format for inter-application communication. SOAP may provide a basic messaging framework that more abstract layers may be build on. SOAP is a standard defined in a W3C Recommendation. SOAP may provide a definition of XML-based data which can be used for exchanging structured and typed information and/or data between peers in a decentralized, distributed environment such as a SOA. SOAP may be considered as a stateless, one-way exchange paradigm, but applications may create or generate more complex interaction patterns (e.g. request/response, request/multiple response, etc.) by combining such one-way exchanges with features provided by an underlying protocol and/or application specific information. Although SOAP is silent on the semantics of any application specific data it conveys, SOAP provides a framework by which application specific information may be conveyed in a extensible manner.

### (Web Service) Handler

Handlers may be similar to servlet filters. Handlers may be implemented with distributed client-server systems. Handlers may exist on both the client and the server side. When using a handler on the client side, there may be a handler processing a (request) message right before it goes on the network and processing a (response) message before it returns to the client. Similarly, one may intercept an incoming (request) message on the server before invoking the service implementation, as well as the outgoing (response) message. Handlers may be shared across multiple service invocations. In other words, handlers may store information that is only valid for a particular client or server instance. Handlers may be configured either programmatically, or in case of running a Java-based application server, handlers may be configured in the web service development descriptor. Handlers may be defined on a per service basis. Handlers may be defined in both the server side and client side deployment descriptors. Handlers may be combined into what is called a "handler chain".

### Proxy Server

In a computer network, a proxy server may be a server (e.g. a computer system, an application program) which serves the requests of its one or more clients by forwarding requests to other servers. A client may connect to a proxy server, requesting some service (e.g. access to a resource, a file, a connection, a Web page or site, etc) from a server. The proxy server may provide the requested service by connecting the server and requesting the service on behalf of the client. A proxy server may be placed in the user's local computer, i.e. at the client or at a position between the user (client) and the (destination) serves or on a network such as the Internet.

### SQL injection

SQL injection may be a technique to exploit a security vulnerability occurring in the database layer of a (web) application or service. Vulnerability may be present when user input may either incorrectly filtered for string literal characters embedded in SQL statements or user input may not strongly typed and thereby unexpectedly executed. SQL injection may be an instance of a more general class of vulnerabilities that can occur whenever a programming or scripting language is embedded inside another. In case of SQL injections on web services, an SQL query is embedded into a messaging protocol such as SOAP in order to convey a request from a remote client to a service and vice versa, i.e. the database query language SQL is embedded into SOAP.

### Input Validation

Input validation may also be referred to as sanity checking, input filtering, or white listing. Input validation may be performed on incoming data (e.g. at a (web) application or service) that is not heavily controlled and trusted. This may include user-supplied data (e.g. query data, post data, cookies, referrers, and others), data stored in a database from a third-party (e.g. a web service), or elsewhere. Input validation may include various methods checking for validity of a (request) message from a client arriving a server, e.g. requesting (access to) data from a resource such as a web service or a database. Such methods may include, but are not limited to message normalization, character set checking and length restrictions as well as data format and/or data type checking.

### Output Validation

Output validation may also be referred to as output filtering or output encoding. Output validation may refer to controlling or checking output encoding from a (web) application, web service, or database. Validating output may include checking to see that the output a service or application is about to send matches what is expected to be send. Applications and services may perform output validation to make sure that output does not contain potentially dangerous characters. This may disable attacks on interpreters that end up with data from a service or application which may provide inside to the inner structure of the service or application.

### Brief Description of the Drawings

Figures 1A to 1C show an exemplary soap request message, an exemplary dynamic generation of a corresponding SQL statement, and an exemplary corresponding soap response message.
Figure 2 shows an exemplary block diagram of an SQL-injection over a network.
Figure 2A to 2B show an exemplary SQL-injection using a SOAP message with a web service.
Figure 3 shows an exemplary input/output validation to avoid SQL-injections over a network.
Figure 4 shows an exemplary flow diagram to avoid simple SQL-injections.
Figures 4A and 4B show an exemplary simple SQL-injection using SOAP messages.
Figure 5 shows an exemplary flow diagram to avoid complex SQL-injections.
Figures 5A and 5B show an exemplary complex SQL-injection using SOAP messages.
Figure 6 shows an exemplary flow diagram to avoid compound SQL-injections.
Figures 6A and 6B show an exemplary compound SQL-injection using SOAP messages.
Figure 7 shows an exemplary flow diagram for a validating input method.
Figures 7A and 7B show exemplary request and response messages upon which input validation and output validation is performed.
Figure 8 shows an exemplary flow diagram for output filtering a fault method.
Figure 9 shows an exemplary flow diagram for filtering exceptions in an invoke method.
Figure 10 shows an exemplary computer (network) system.

### Detailed Description

In the following, a detailed description of examples will be given with reference to the drawings. It should be understood that various modifications to the examples may be made. In particular, elements of one example may be combined and used in other examples to form new examples.

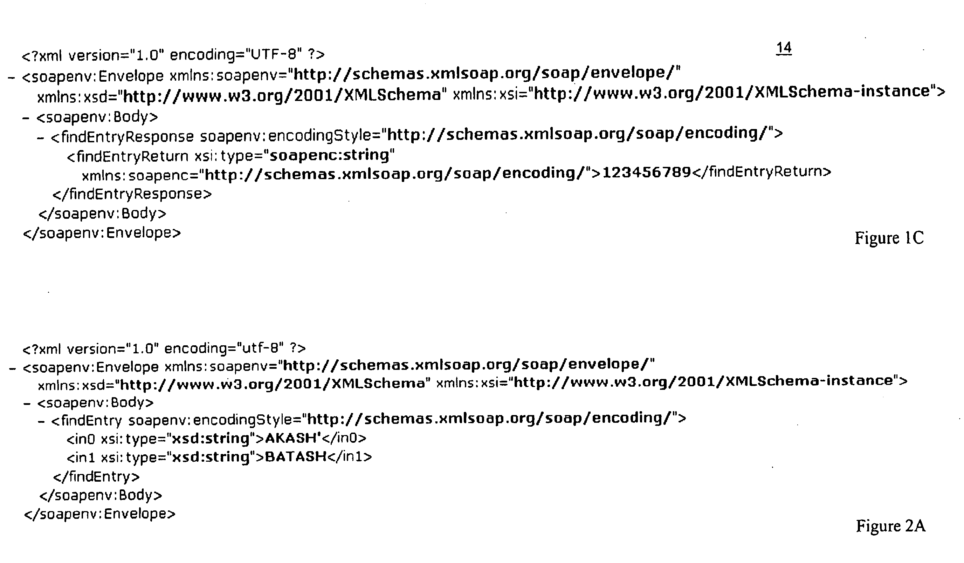

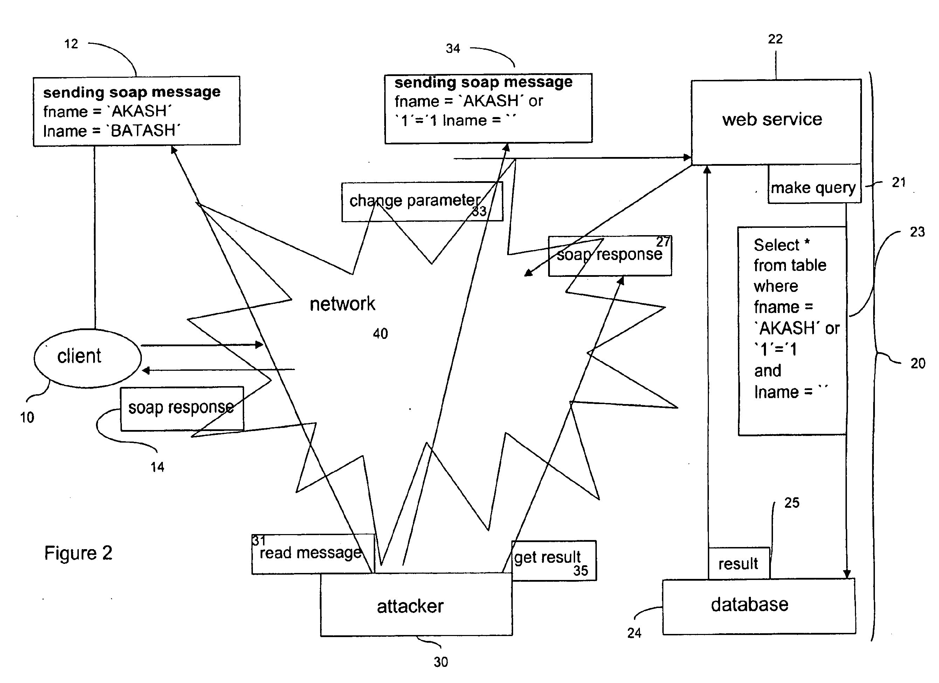

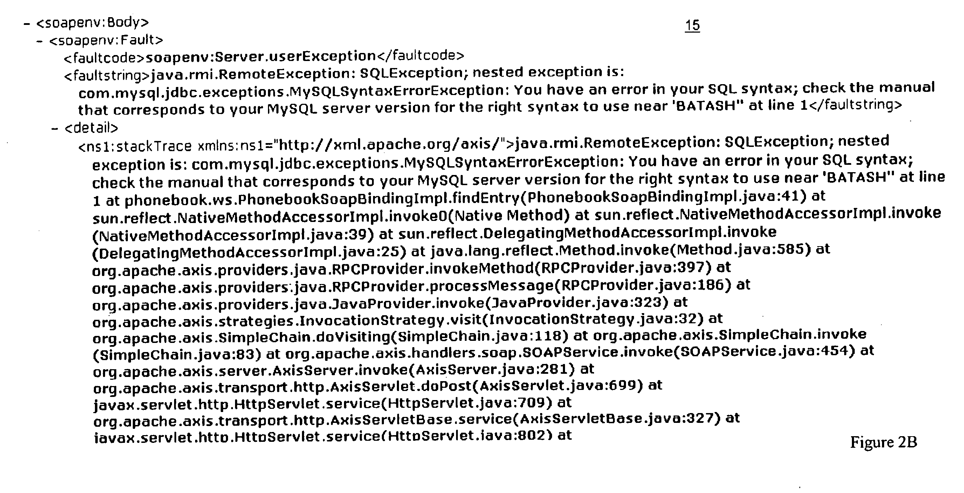

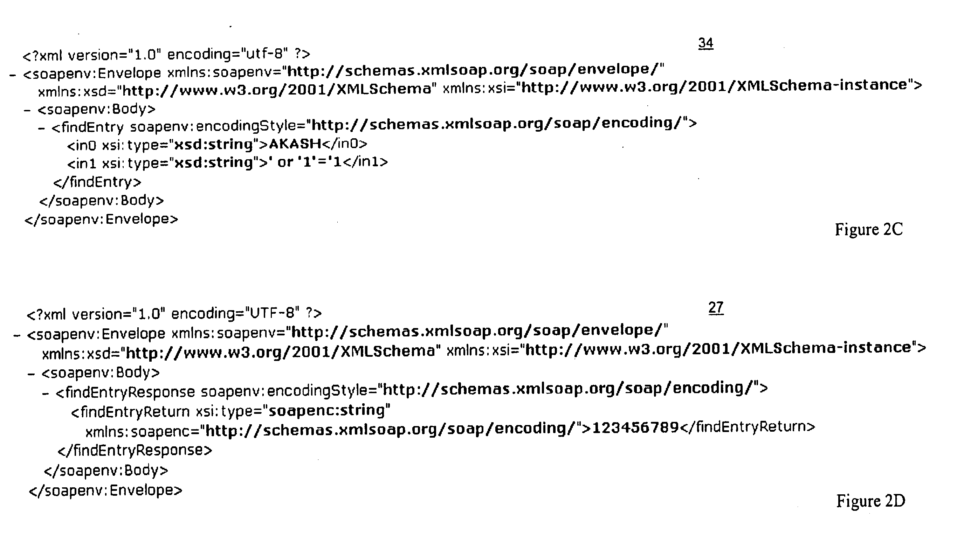

**Fig. 2** shows an exemplary situation of invoking a (web) service 22 located at a server 20. The server 20 comprises at least one service or web service 22 and at least one resource 24. The resource 24 may be a database or a data warehouse, for example. The service 22 is connected to the resource 24. The service 22 is operable to process delegate incoming requests 12, 34 to the resource 24, which, in turn computes a result or response 25 to a incoming request. The result 25 is processed by the service 22 and send back to the client 10 in a response message 14. At least one client 10 such as another service or an end-user can access the service 22 over a network 40 such as the Internet or the World Wide Web.

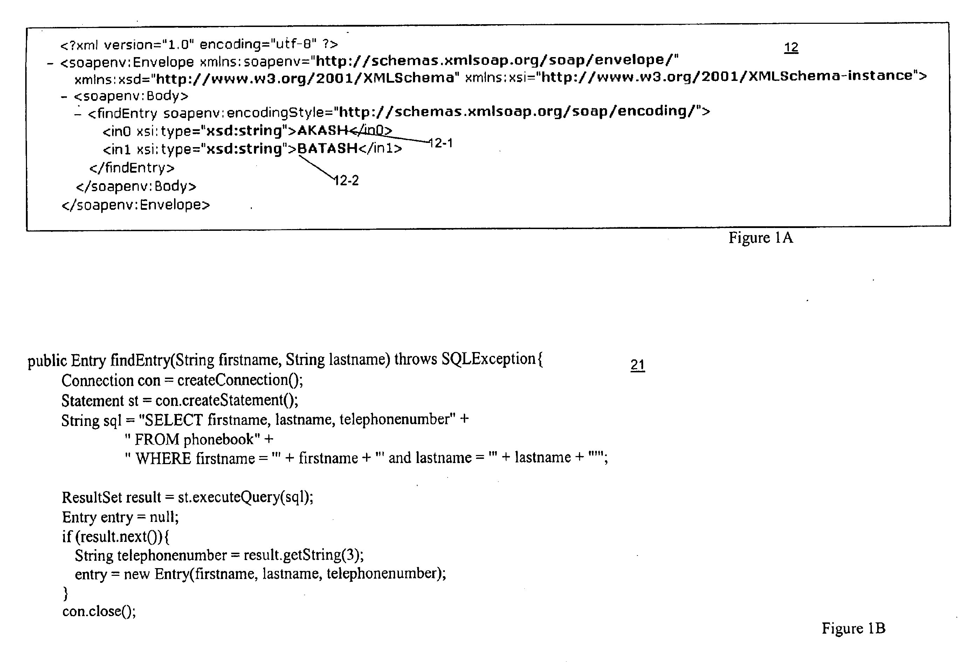

In one implementation, the service 22 is a SOA web service, wherein a communication among the service 22 and at least one client 10 over the network 40 is realized using SOAP messages. An exemplary SOAP request message 12 is shown in **Fig. 1A****.** The request message 12 is send from a client 10 over the network 40 to the service 22. The service 22 is operable to substantially dynamically generate a (database) query 23 from the request message 12 using a query generator 21. An exemplary SQL query 23 generated from the request message 12 is shown in **Fig. 1** **B.** The generated database query 23 is send from the service 22 to a database 24 where it is executed. The service 22 is connected to the database 24. After a result 25 is computed at the database 24, the result 25 is send back to the service 22. The service 22, in turn, generates a response message 14 from the result 25 and sends it back to the client 10 over the network 40. An exemplary SOAP response message 14 is shown in **Fig. 1C****.** The SOAP response message 14 corresponds to the SOAP request message of **Fig. 1A****.**

In other words, in one implementation web services 22 are invoked by exchanging SOAP messages which are based on XML. Hence, all request and response messages 12 and 14 exchanged with a web service 22 are SOAP messages. SOAP messages may be passed through one or more intermediaries to reach a final destination, i.e. a service 22 or a client 10. In a computer system, an intermediary may be a third party that offers intermediation services between two parties (e.g. a client 10 and a server 20). An intermediary may act as a conduit for services offered by a service to a client. In particular, an intermediary may offer some added data or information to a transaction or communication between two parties (i.e. client and server) that may otherwise not be possible by direct communication and/or transaction.

**Figs. 1A to 1C** show a simple example of SOAP request and response messages which may be exchanged in a distributed system such as that shown in **Fig. 2****.** Assuming a simple web service 22 for phone books located on a server 20 which provides an interface for finding phone book entries. The interface may take two input parameters 12-1 and 12-2 (i.e. a first name and a last name) and returns a phone number. If a user tries to invoke the service 22 from his/her client10 with a first parameter "AKASH" as first name and a second parameter "BATASH" as last name, then a SOAP request message 12 may look like as the one shown in **Fig. 1A****.**

The first line of the SOAP request message 12 is a general XML header. The SOAP request message 12 includes one specific sub-element within the overall soapenv:Envelope element, namely a soapenv:Body element. The content of the soapenv:Body element is application defined and not part of the SOAP specifications (i.e. the W3C SOAP Recommendations), although the SOAP specification do have something to say about how such elements must be handled. The soapenv:Body element is a mandatory element within the soap:Envelope, which implies that this is where a main end-to-end information conveyed in a SOAP message must be carried.

According to the example SOAP request message 12, the soapenv:Body comprises information, where (i.e. at which service 22) information can be found and what kind of information (i.e. an entry with first name "AKASH" and last name "BATASH") is requested from the phone book service 22. When the web service 22 receives the SOAP request message 12, the service 22 generates a database query 23 from the message 12 using a query generator 21. In one aspect, the query 23 may be a SQL query. Accordingly, a SQL query corresponding to the SOAP request message 12 could be:
SELECT phonenumer FROM phonebook WHERE
   firstname = 'AKASH' AND lastname = 'BATASH'

In one aspect, this SQL query is generated from the SOAP request message 12 using a query generator 21 which comprises a JAVA program such as the one shown in **Fig. 1** **B.** **Fig. 1** **B** exemplary shows how SQL queries can be generated substantially dynamically from SOAP request messages. Hence, a user gives some data as input at his/her client 10 to a service 22 located at a server 20. The input of the user may be send as a SOAP (request) message 12 to the service 22. The service dynamically forms or generates some SQL command from this input , e.g. using a query generator 21.

An exemplary SOAP response message 14 computed by the web service 22 through the above described database communication between the service 22 and the database 24 to the SOAP request message 12 is shown in **Fig. 1C****.** Similar to the SOAP request message 12, the soapenv:Body element of the SOAP response message 14 comprises the information carried to the client 10. Accordingly, the element comprises the phone number "123456789" corresponding to the requested person having first name "AKASH" and last name "BATASH".

As shown with reference to **Fig. 2****,** an attacker 30 may read or monitor 31 a request message 12 send from a client 10 to a service 22 over a network 40. The attacker 30 may further put some additional data 33 into the request message 22 or change 33 the request message 22. The attacker 30 can change the request message 12 by using special characters inside the query of the message 12 to access more data from the database 24 via the web service 22 then he/she should be able to. Special characters may be characters from a character set such as ASCII which do not belong to alphabetic and/or numeric characters, e.g. "_; --; %; &;" etc. Such attacks are referred to as database injections. In case the database query language SQL is used to access the database 24, the attacks are referred to as SQL injections. To prevent an attacker 30 from changing a request message 12 (i.e. to prevent SQL injections), the request message 12 needs to be filtered prior to sending it to a (web) service 22. Filtering a request message 12 is referred to as input validation.

Many different kinds of attacks exist. In one example, an attacker 30 can use single special characters such as "%, ', --, ;" within a request message 12 to a service 22 to find out or to determine whether the service 22 is vulnerable or not. If the service 22 is vulnerable, then depending on a corresponding response message 14, the attacker 30 can attack the service 22 and the underlying resource or database 24 in different ways. For example, the attacker 30 can add more conditions or extra (SQL) commands) to the request message 12 aiming at a changed request message 34. Such an attack may be referred to as incorrectly filtered escape characters which is a form of an SQL injection. Escape characters may refer to special ASCII characters.

In other words, this form of SQL injection occurs when a request message 34 is not filtered for escape characters before passed into a (dynamically) formed SQL query by a query generator 21 of a (web) service 22. Not filtering a request message 34 for escape characters may result in a potential manipulation of (SQL) statements performed on a database 24 by an end user of a service 22.

**Figs.** 2 **and** **2A to 2D** show an exemplary attack based on adding special characters to a request message 12. In order to check whether a service 22 is vulnerable, an attacker 30 uses a special character, e.g. ' as shown in **Fig. 2A****,** after the first name of the previously introduced SOAP request message 12 against a phone book service 22. In other words, the attacker 30 writes a query where the first name input parameter is "AKASH' " rather than "AKASH" (i.e. with an apostrophe after the name) Since this request is faulty, the service 22 sends back a response message 15 as shown in **Fig. 2B****,** which is a fault message. According to the fault message 15, the attacker 30 can learn or understand that the service 22 is vulnerable and that the user or developer of the (original) request message 12 has not checked the request input properly. Form the fault message 14, the attacker 30 gains understanding of the inner structure of the service 22. Upon this fault message 14, the attacker 30 can attack the service 22 using a new approach in order to receive more information from the underlying database 24 than he/she should be able to as shown in **Figs. 2C and 2D****.** In order to avoid such kinds of attacks, not only an input, i.e. a request message should be filtered, but also an output, i.e. a response message, should be filtered. Filtering output data such as response messages is referred to as output validation.

After have received the fault message shown in **Fig. 2B****,** the attacker 30 uses his/her gained inside information about the service 22 to formulate a new attack. Exemplary, the attacker 30 can use an always true statement as shown in Fig. **2C****.** Accordingly, the attacker 30 formulates a new request message 34 to invoke the service 22
wherein the first name is further "AKASH" and the last name is now specified by "'or' 1 '='1 ". Since neither at the client 10 nor at the server 20 the input parameters of the request message 34 are checked properly, the service 22 just takes the request message 34 and dynamically generates a database query 23 using a query generator 21 as shown in the example Java code of **Fig. 1B****.** Accordingly, the request 34 is interpreted at the database 24 as
SELECT phonenumber FROM phonebook WHERE
firstname = "AKASH"AND lastname = '"or'1 1'='1"

In this SQL query, the clause '1'='1 is interpreted to be always true. The full condition is lastname = " OR 1 '='1 which is evaluated to always true. Hence, the attacker 30 receives the same result, i.e. the phone number of AKISH without providing the necessary information, i.e. the last name of the person from whom he/she is seeking a phone number. The response message 27 is shown in **Fig. 2D****.**

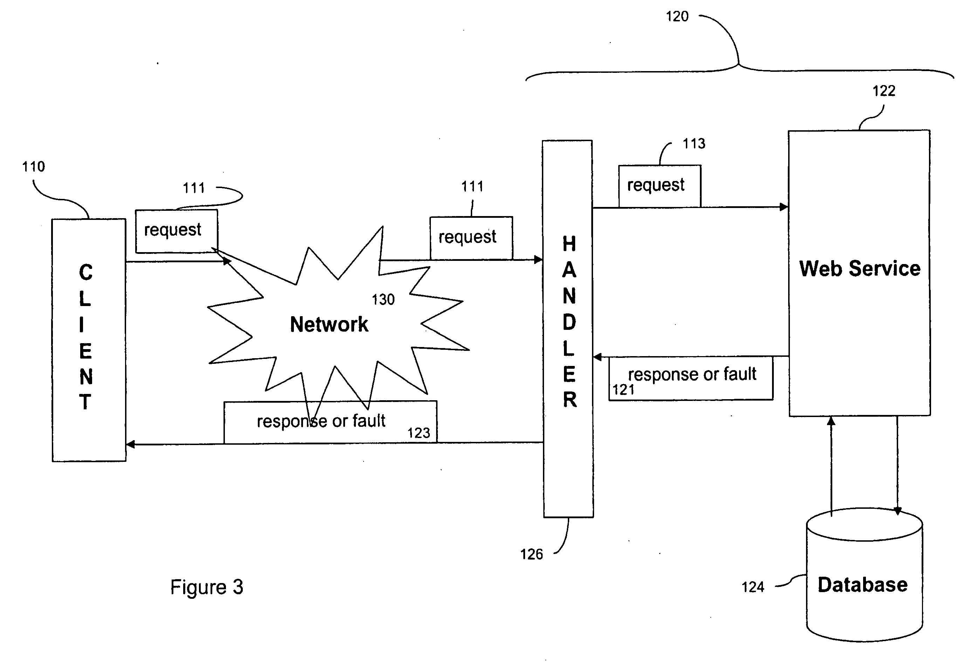

**Fig. 3** shows an exemplary distributed client-server architecture, e.g. SOA-based system, for input validation and output validation to avoid or prevent attacks such as SQL injections through messages 111, 121 such as SOAP messages, wherein an inner structure of a web service 122 is protected. The inner structure of a web service 122 may refer to details of an implementation of the service 122 on a server 120 such as how database queries are dynamically generated from messages, how an underlying database 124 is designed and implemented, and how errors are processed, handled and/or communicated, e.g. between the database 124 to the service 122.

Testing, checking, and/or validating substantially all kinds of input and output from a service 122 may be difficult in case of a large and complex service 122. Furthermore, it might be not well-designed code and it might increase redundant pieces of code in the service if input validation and output validation is directly handled through messages 111, 121 and the service 122 itself.

In one implementation, input validation and output validation is handled or realized through a handler 126 such as a handler of the Axis SOAP processor. The handler 126 is implemented inside the container of a web service 122 on a server 120 as shown in **Fig. 3****.** The handler 126 is invoked to process request messages 111 and/or response messages 121 coming from a client 110 and the web service 122, respectively. At some point the handler 126 may send a request 113 and receive a response 121 or else process a request 111 and produce a response 123.

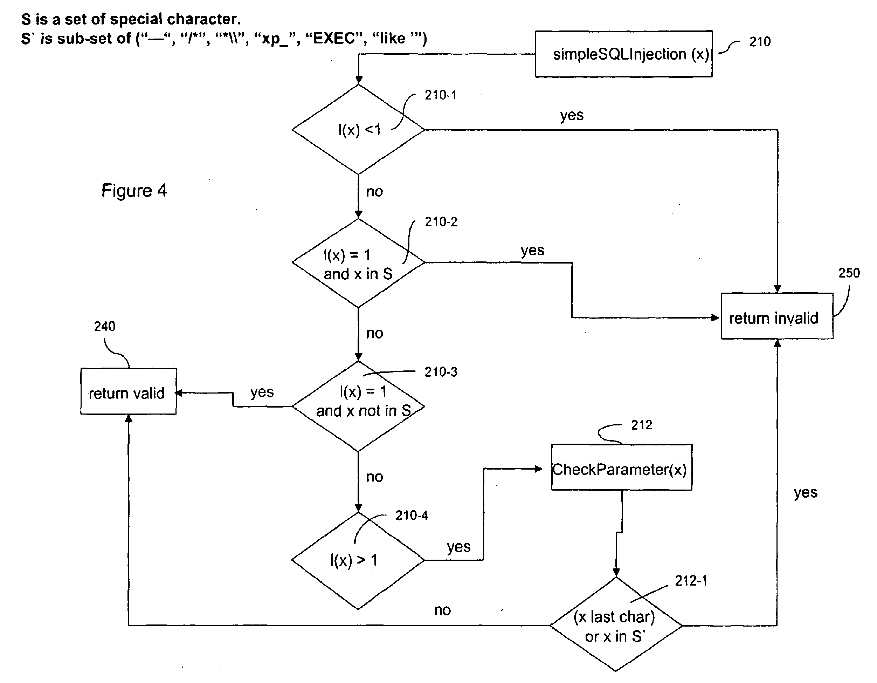

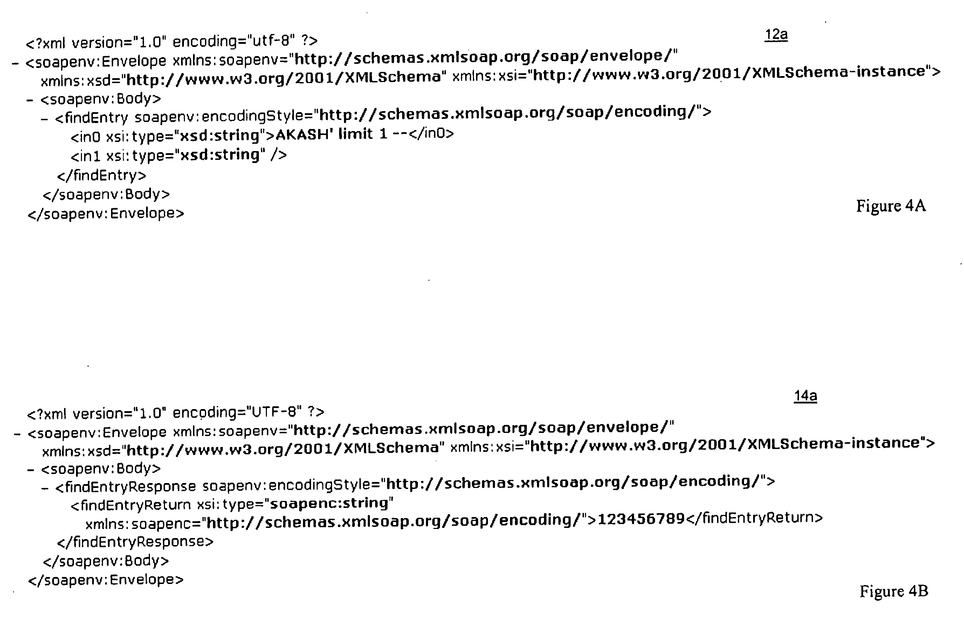

In an alternative implementation, a proxy (server) may be used to handle input validation and output validation. However, using a handler 126 rather than a proxy allows for more efficient and less time consuming filtering of inputs and outputs such as request messages 111 and response messages 121. Furthermore, using a handler 126, other security mechanisms such as user authentication and authorization can be combined with input validation and output validation to ensure integrity of messages 111, 121 such as SOAP messages in a system such as a SOA web service. Beyond, since the handler 126 is responsible for input validation and output validation, a developer or a user formulating requests 111 against the web service 122 need no longer be aware of input validation and output validation. The handler 126 performs these validations transparently to prevent an attacker from using special characters such as escape characters which can lead to attacks such as SQL injections or let the attacker gain better understanding of the inner structure of the service 122 such as those previously shown with reference to **Figs. 2** **and** **2A to 2D**. Although the hander 126 on the server 120 might increase the computation time on the server 120 when computing a response message 121 to a request message 111 received from a client 110 due to input and output validation, the overall performance of a handler is better than that of a proxy knowing that there (substantially always) is a trade off between security and time consumption in a client-server system. An implementation of the handler-based input validation and output validation which is less time consuming and more efficient is detailed described below with reference to **Figs. 4 to 6****.**

In one example, the handler 126 is implemented using a handler interface such as an interface which is provided by Axis. Axis from Apache is one of the most popular platforms for web services implemented in Java. In another example, the handler 126 is implemented using a handler interface that is a RPC (Remote Procedure Call) Handler.

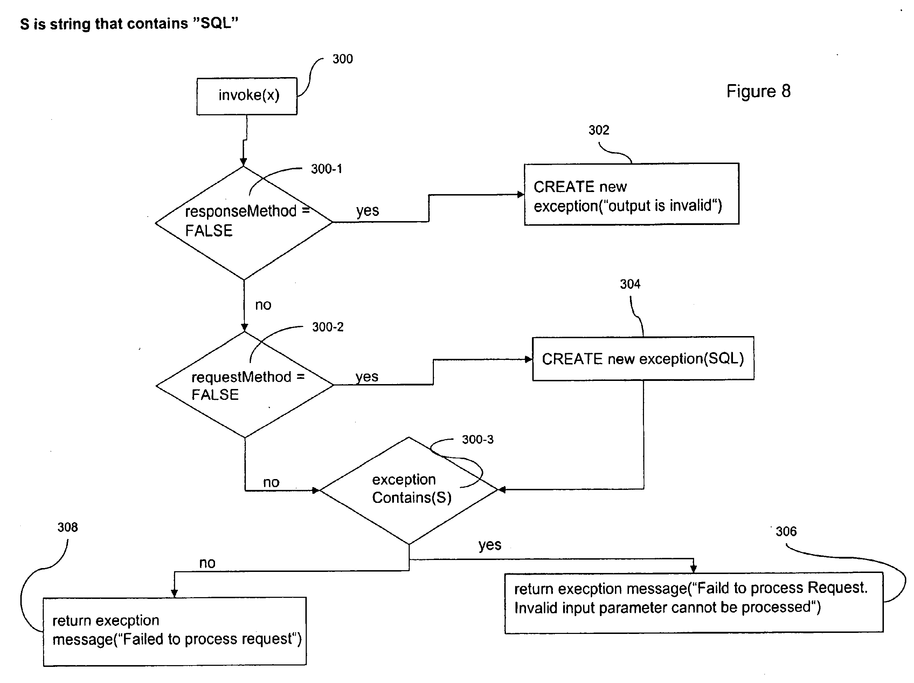

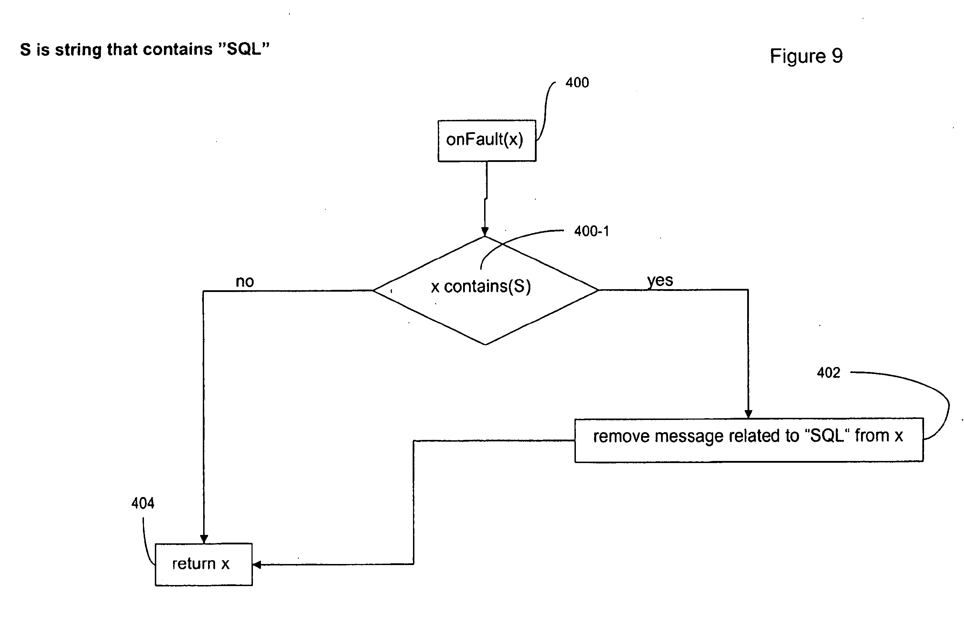

The handler 126 is implemented on the server 120 inside the web service container. The handler 126 comprises two methods: a first method 300 method and a second method 400. The first method 300 is referred to as invoke method as shown in **Fig. 8** and the second method 400 is referred to as onFault method as shown in **Fig. 9****.** The implementations of the two handler methods 300 and 400 are described in grater detail below.

The first method 300 is called or invoked at the handler 126 each time a message 111, 121 is received from a client 110 or from the service 122 at the handler 126. In other words, no message 111, 121 is communicated directly between a client 110 and the service 122 without being checked or validated by the handler 126.

In one example, a request message 111 to access the service 122 is received from a client 110 at the server 120. The first method 300 is called at the handler 126 before a service method is called at the service 122 to process the request message 111. The first method 300 checks the request message 111 by checking one or more input parameters comprised in the request message 111. The first method 300 frees the request message 111 from special characters such as escape characters and/or more complex constructs, which are not allowed as input parameters and subsequently passes the request message 111 to the service 122 or otherwise throws a fault message 123 explaining that the message 111 was not passed to the service 122. Those checks are performed at input validation time.

In one example, a response message 121 is send from the service 122 to the client 110. In this case, the handler 126 calls the first method 300 before sending the (possibly faulty) response message 123 to the client 110. The first method 300 checks the response message 121. If the response message 121 is free of unwanted characters which might lead to failure of the client 110, the handler 126 passed the response message 121 to the client 110. Otherwise, the handler 126 throws a fault message 123. Those checks perform output validation to prevent failure of the client 110.

In one example, a fault message 121 either in response to a request message 111 or as a substitute for a response message 121 is thrown. In this case, the handler 126 additionally calls the second method 400 before sending the fault message 123 to the client 110. The second method 400 checks the fault message 121 and generates or computes a customized fault method 123. For example, if the fault message 121 comprise at least one exception, e.g. a database exception such as a SQL exception, an attacker can understand the inner structure of the service 122. Following that, the fault message 121 comprising at least one database exception is customized such that the attacker can neither guess nor gain inside on what is happening at the database 124 underlying the service 122 and on how the query is generated in a query generator.

In one implementation, input validation of a request message 111 send from a client 110 to the service 122 is performed on the handler 126 by the first method 300. Checking or validating the request message 111 is differentiated into three different criteria: simple, complex, and compound checks of simple, complex, and compound attacks (e.g. SQL injections).

An example of a simple SQL injection using a SOAP request message 12a send from a client 10 to a service 22 is shown in **Figs. 4A and 4B**. Checking simple SQL injections comprises checking input and output of a SOAP message in only simple cases such as special characters for SQL commands like "%, ;, --, ', /*". In other words, checking simple SQL injections comprises checking whether a request message 12a comprises special characters from a character set used in a database query language such as SQL (e.g. ASCII) which are not intended or expected in a well-formed or syntactically correct database query in view of the syntax of the database query language.

Considering again the example described with reference to **Figs. 1A to 1C****,** wherein a user requests the phone number of a person having first name AKISH and last name BATASH from a phone book service. That is, a correctly formulated request or query for receiving a phone number from a phone book service requires two input parameters, one referring to a first name and another to a last name. Providing no simple input validation, an attacker 30 may perform an attack as shown in **Figs. 4A and 4B**. Assuming that an attacker knows that a service 22 is vulnerable (i.e. that no simple SQL injections are checked), the attacker may attack the service 22 with different approaches. For example, the attacker may formulate or specify a SOAP request message 12a having input parameter firstname = "AKASH'--" and input parameter lastname is empty as shown in **Fig. 4A**. Then the following SQL query is generated from the SOAP request message 12a:
SELECT phonenumber FROM phonebook WHERE
   firstname = "AKASH' limit 1--" AND lastname = " "

This SQL query is evaluated such that everything which is stated after the "--" is treated as a comment and not evaluated. Hence, after "--" the query string is not executed. Since the service 22 is vulnerable, the service 22 receives the query without being checked and dynamically generates an SQL query (as shown above) from the request message 12a. Subsequently, the service 22 sends the generated SQL query to an underlying database 24. The database 24 computes a result 25 which the attacker 30 receives without being checked. In other words, the attacker 30 receives a result 25 to this query although a value for the second parameter (i.e. a last name) is missing because the query evaluator does not take the string after the "--" character. A response message 14b received by the attacker 30 in response to his/her query is shown in **Fig. 4B****.**

To prevent such an attack, a simple check 210 for input validation is implemented as shown in **Fig. 4****.** The simple check 210 is performed previous to send a request message 12a to a service 122. A function or method for checking simple SQL injections 210, has as input value a parameter 12-1, 12-2; x defined in a request message 12. In case the length of characters of the input parameter x is less then 1 (210-1), i.e. if the (required) input parameter x for formulating the intended query correctly is empty, then invalid 250 is return. That is, the query is not correct. Correctness of a query may refer to both a syntactically formulated query in view of the syntax of a database query language as well as correctly specified queries in view of data required for a specific query such as the number of required input parameters. Otherwise, it is checked whether the length of characters of the input parameter x is 1, i.e. a single character and whether this single character is one of the special characters defined in the set S (210-2). If this test evaluates to true, the query is invalid 250. This test is performed due to the fact that a single special character is no valid input parameter for a SQL query. If the single character is not in the set S (210-3), the query is valid 240. In a fourth step (210-4), the case for an input parameter x of character length greater than 1 is checked. For such cases, a function or method 212 for checking parameters is called. In case, the parameter x is the last character or x is in the subset S' of S (212-1), then invalid 250 is returned. Otherwise, the input parameter x is valid 240.

In one example, a pseudo code implementation for checking simple attacks (e.g. simple SQL injections) is specified as follows:

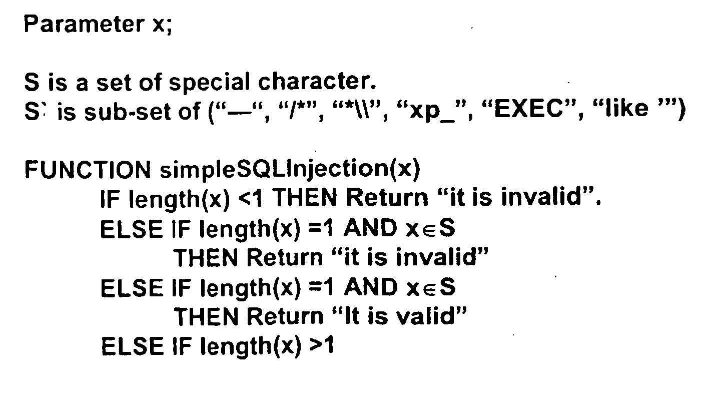

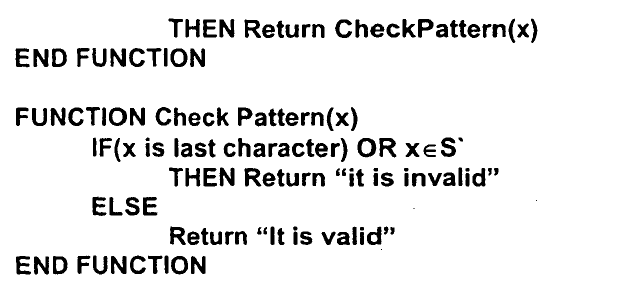

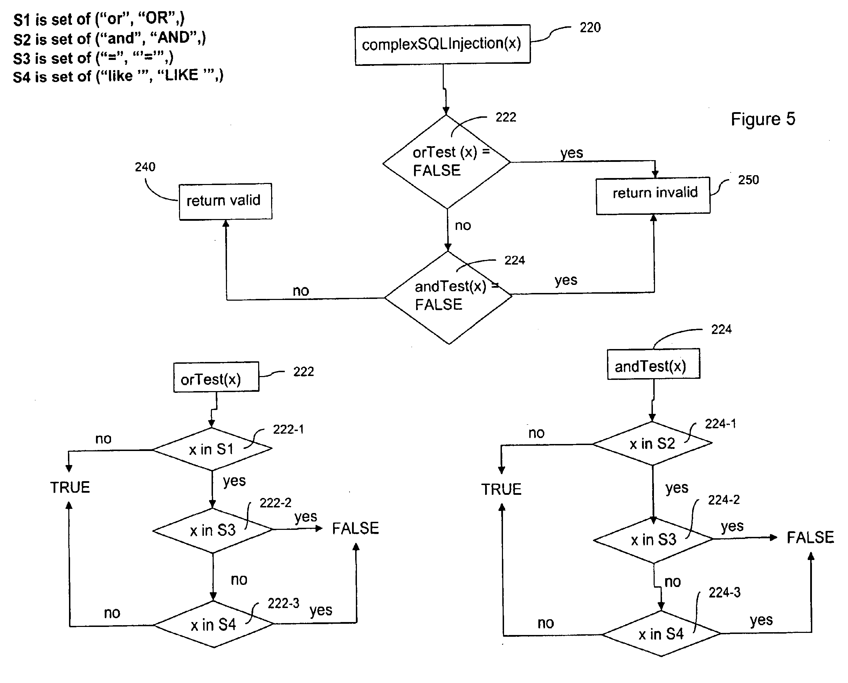

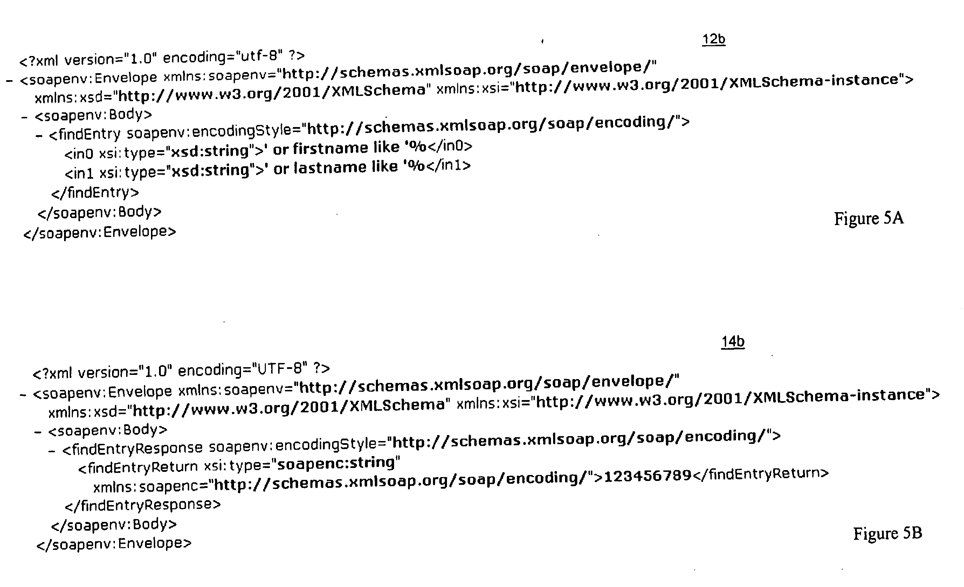

An example of a complex SQL injection using a SOAP request message 12b send from a client 10 to a service 22 is shown in **Figs. 5A and 5B****.** Checking complex SQL injections comprises checking input and output of a SOAP message in more complex cases where an attacker 30 adds one or more additional conditions to the query which are constructed from "OR" and/or "AND" SQL commands. For example, although a query to receive a phone number of a person from a phone book service may require only two input parameters 12-1 and 12-2, a value for a first name and a value for a second name, an attacker 30 may add supplementary query conditions into the two parameters by using SQL "AND" and/or "OR" syntax constructs.

Considering again the example described with reference to **Figs. 1A to 1C****,** wherein a user requests the phone number of a person having first name AKISH and last name BATASH from a phone book service. That is, a correctly formulated request or query for receiving a phone number from a phone book service requires two input parameters, one referring to a first name and another to a last name. Providing no complex input validation, an attacker 30 may perform an attack as shown in **Figs. 5A** **an 5B.** Assuming that the attacker 30 knows that the service 22 is vulnerable (i.e. that no complex SQL injections are checked), the attacker 30 may attack the service 22 with different approaches. For example, the attacker 30 may change the SOAP request message 12b having input parameter firstname as' or firstname like '%' and input parameter lastname as ' or lastname like '%' as shown in **Fig. 5A****.** Then the following SQL query is generated from the SOAP request message 12b:
SELECT phonenumber FROM phonebook WHERE
   firstname = ' or firstname like '%' AND
   lastname = " or lastname like '%'

This SQL query is evaluated such that every phone number entry from the phonebook table can be selected. Following that, the phone number entry for the person Akash Batash can be selected, although the query is invalid, i.e. the input parameters for the first name and the last name are not explicitly specified. Hence, the attacker 30main gain information from the database 24, he/she should not be able to get. A response message 14b corresponding to the request message 12b is shown in **Fig. 5B****.**

To prevent such an attack, a complex check 220 for input validation is implemented as shown in **Fig. 5****.** A function or method for checking complex SQL injections 220, has as input value an input parameter 12-1, 12-2; x defined in a request message 12. In case a function or method performing an "or-test" (222) returns false, then the input parameter x is invalid 250. Otherwise, a method performing an "and-test" (224) is called. In case the "and-test" method 224 also returns false, the input parameter x is invalid 250. Otherwise, the input parameter x is valid 240. The "or-test" method 222 checks whether an input parameter x comprises a query command formulated with the SQL "OR" construct. Similarly, the "and-test" method 222 checks whether an input parameter x comprises a query command formulated with the SQL "AND" construct.

The "or-test" method 222 called from the method for checking complex injections 220 performs the following checks: Initially, it is checked whether the input parameter x is in the set S1 (222-1). If this is not the case, a truth value is returned. Otherwise it is checked whether the input parameter x is in the set S3 (222-2). If this test is evaluated to true, false is returned. Otherwise, it is checked, whether the input parameter x is in the set S4 (222-3). In case this is true, false is returned, otherwise true is returned.

The "and-test" method 224 called from the method for checking complex injections 220 performs the following checks: Initially, it is checked whether the input parameter x is in the set S2 (224-1). If this is not the case, a truth value is returned. Otherwise it is checked whether the input parameter x is in the set S3 (224-2). If this test is evaluated to true, false is returned. Otherwise, it is checked, whether the input parameter x is in the set S4 (224-3). In case this is true, false is returned, otherwise true is returned.

In one example, a pseudo code implementation for checking complex attacks (e.g. complex SQL injections) is specified as follows:

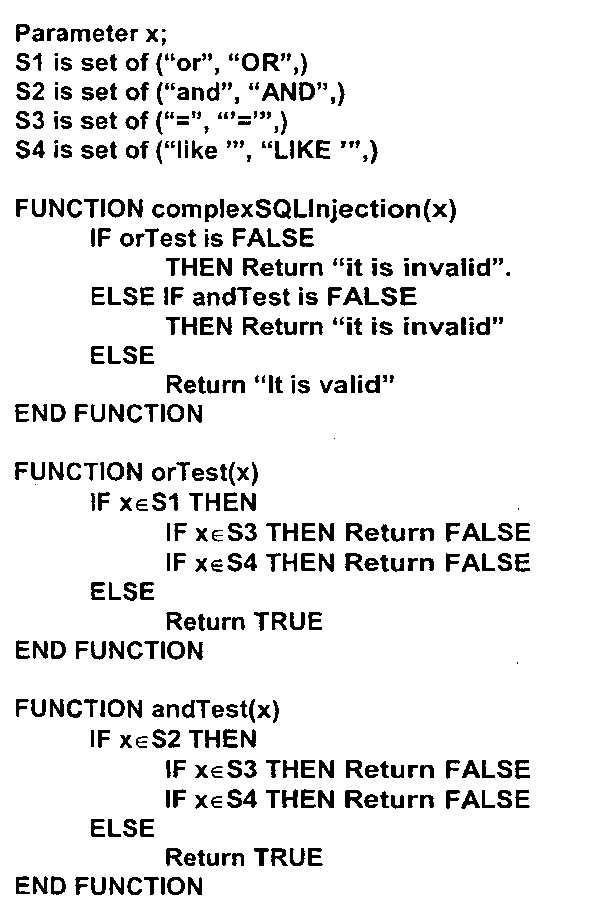

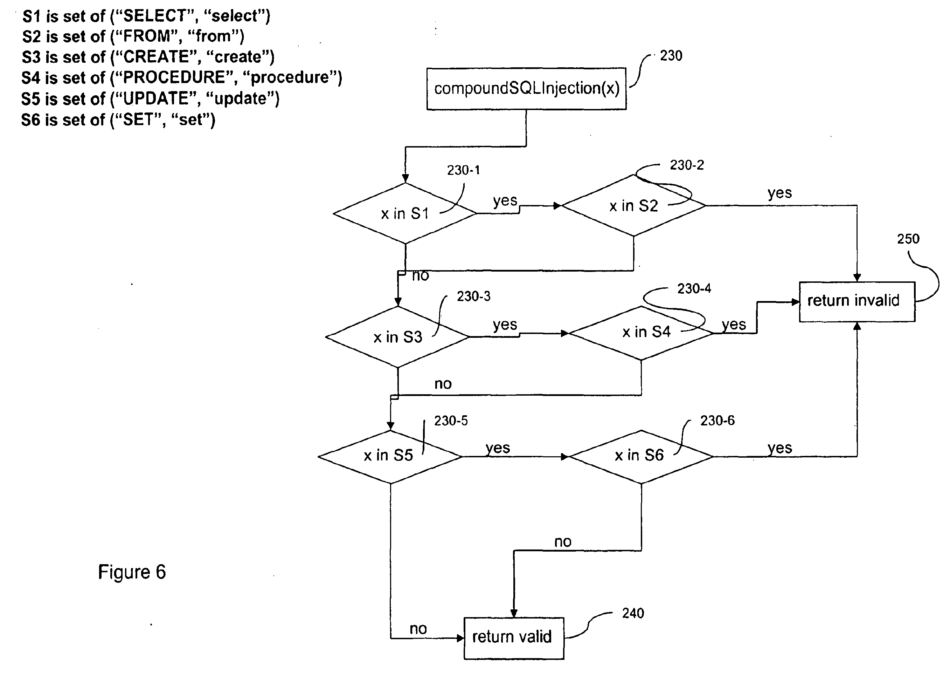

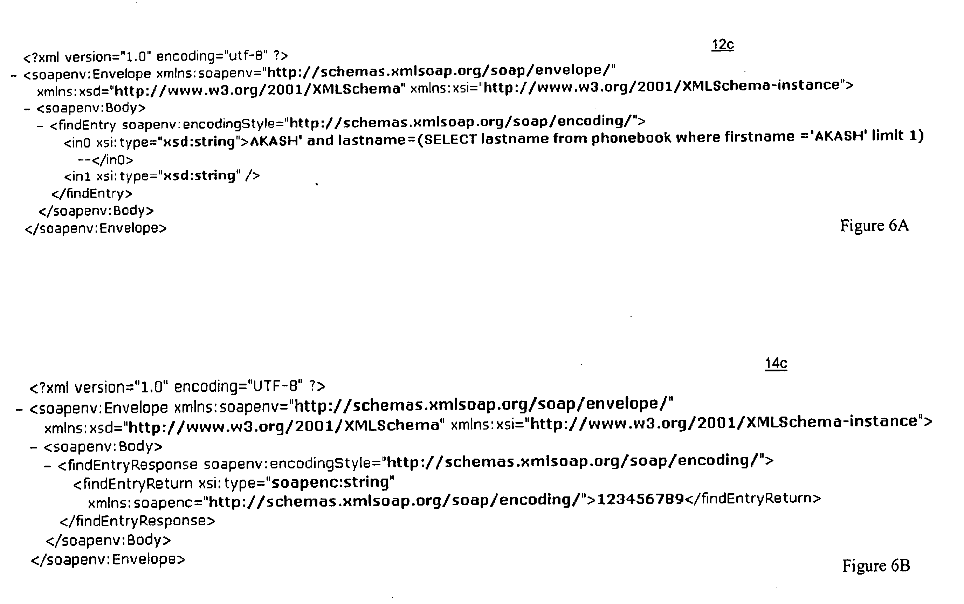

An example of a compound SQL injection using a SOAP request message send from a client 10 to a service 22 is shown in **Figs. 6A and 6B****.** Checking compound SQL injections comprises checking input and output of a SOAP message in case which go beyond those of simple and/or complex SQL injections. For example, a compound check may comprise checking whether a value for an input parameter comprises more complex SQL syntax constructs such as a "SELECT ... FROM ... WHERE" statement or a "CREATE" statement.

Considering again the example described with reference to **Figs. 1** **A to 1C,** wherein a user requests the phone number of a person having first name AKISH and last name BATASH from a phone book service. That is, a correctly formulated request or query for receiving a phone number from a phone book service requires two input parameters, one referring to a first name and another to a last name. Providing no compound input validation, an attacker 30 may perform an attack as shown in **Figs. 6A** **an 6B.** Assuming that the attacker 30 knows that a service 22 is vulnerable (i.e. that no compound SQL injections are checked), the attacker 30 may attack the service 22 with different approaches. For example, the attacker 22 may specify or formulate SOAP request message 12c having input parameter firstname = AKASH' and lastname = (SELECT lastname FROM phonebook WHERE firstname 'AKASH' limit 1)-- as shown in **Fig. 6A****.** Then the following SQL query is generated from the SOAP request message 12c:
SELECT phonenumber FROM phonebook WHERE
   firstname = "AKASH" AND lastname = (SELECT lastname FROM phonebook WHERE firstname = 'AKASH' limit 1) -- AND
   lastname = "BATASH"

This SQL query is evaluated for persons having first name AKISH and the last name of those persons is selected from the phonebook table. Accordingly, the attacker receives a phone number entry for the person Akish Batish, although he/she as not properly defined a valid input parameter for the last name. The attacker rather selects the last name from the table phonebook for persons having first name AKISH. A response message 14c corresponding to the request message 12c is shown in **Fig. 6B****.**

To prevent such an attack, a compound check 230 for input validation is implemented as shown in **Fig. 6****.** The function or method for checking compound SQL injections 230, has as input value a parameter 12-1,12-2, x defined in a request message 12. In case the input parameter x is in the set S1 (230-1), it is checked, whether the input parameter x is also in the set S2 (230-2), if this is evaluated to true, invalid is returned 250 (i.e. it is stated that the input parameter x is no valid input parameter for an SQL query). Otherwise, it is checked, whether the input parameter x is in the set S3 (230-3). If this is the case, it is checked whether the input parameter x is also in the set S4 (230-4). If this is true, then invalid is returned 250. Otherwise, it is checked, whether the input parameter x is in the set S5 (230-5). If this is evaluated to true, it is checked, whether the input parameter x is also in the set S6, invalid is returned 250. Otherwise, valid 240 is returned (i.e. the input parameter defines a valid and/or allowed SQL expression).

In one example, a pseudo code implementation for checking compound attacks (e.g. compound SQL injections) is specified as follows:

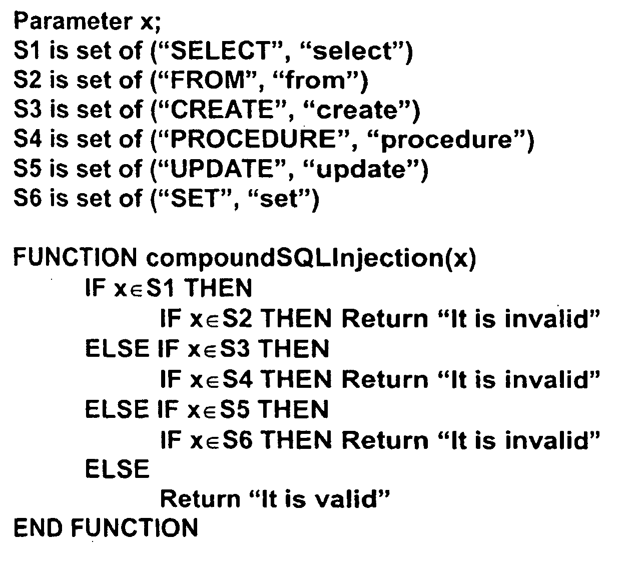

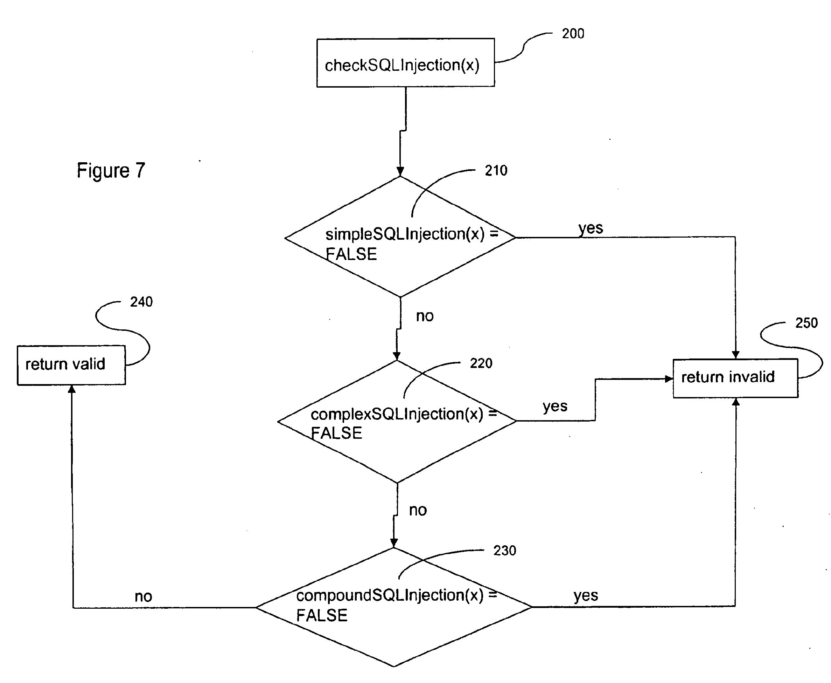

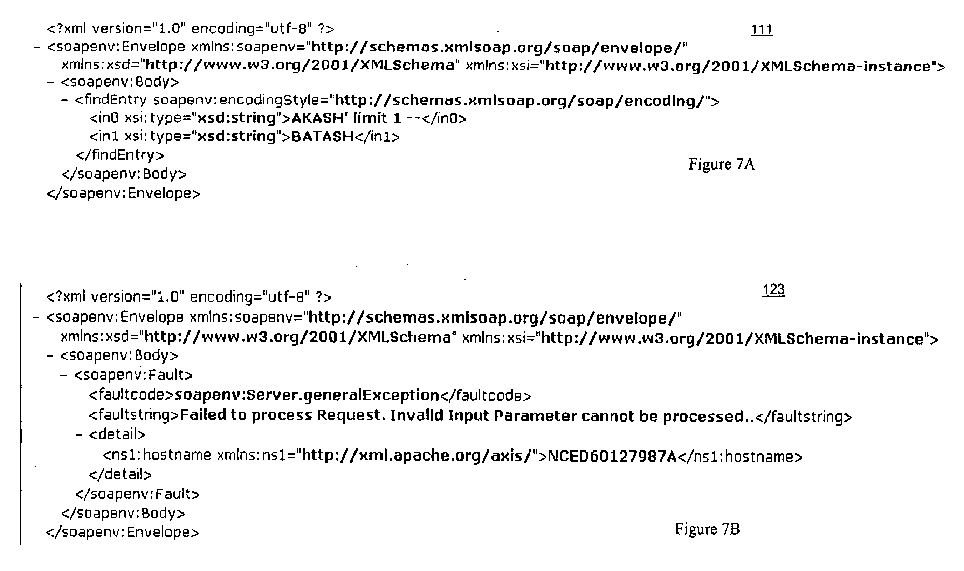

With reference to **Fig. 7****,** it is exemplary shown, how the different kinds or types of input validation used for checking attacks, e.g. SQL injections, can be composed into one method 200. In other words, to prevent different kinds of SQL injections during input validation, when requesting data from a web service 122 stored in an underlying database 124, simple checks 210, complex checks 220, and compound checks 230 are combined as shown in **Fig. 7****.** At first, simple SQL injections are checked (210). If a simple attack has been detected, invalid is returned 250. If no simple attack has been detected, complex attacks are checked (220). If a complex attack has been detected, invalid is returned 250. If no simple and no complex attacks have been detected, also compound checks are checked (230). If a compound check has been detected, invalid is returned 250. Otherwise, the query is valid 240. That means, the checked request message 111 does neither comprise special characters not intended to be used in a valid or syntactically correct SQL query, additional SQL commands specified from SQL "AND" and/or "OR" constructs and hidden in at least one input parameter 12-1, 12-2, nor additional SQL commands specified from SQL constructs such as "SELECT ... FROM ... WHERE" statement or a "CREATE" constructs and hidden in at least one input parameter 12-1, 12-2.

In one example, a pseudo code implementation for checking simple, complex, and compound attacks is specified as follows:

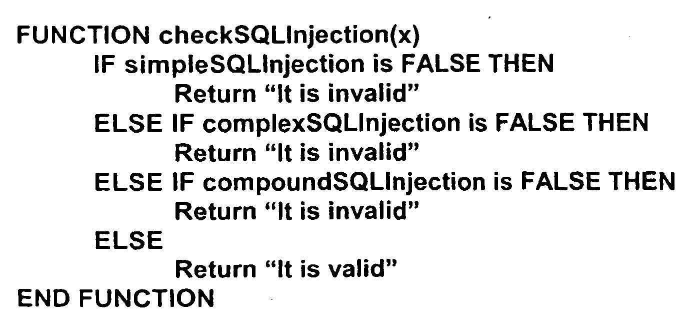

By differentiating between different kinds or types of attacks, an in particular between different kinds of SQL injections, complexity of input validation to prevent SQL injections can be reduced. Additionally, the computation time of the input validation can be further reduced, when SQL injections are distinguished between simple, complex, and compound injections. Furthermore, if the distinguishing types or kinds of injections are checked in an order as shown in **Fig. 7****,** the computation time of input validation is further reduced. First simple SQL injections are checked (210). Subsequently complex SQL injections are checked (220) only if no simple SQL injections have been detected. Finally, compound SQL injections are checked (230) only if neither simple SQL injections nor complex SQL injections are detected.

**Figs. 7A** and **7B** shows an example for input validation and output validation in a client-server architecture as shown in **Fig. 3****,** where a handler 126 on a server 120 also locating a web service 122 is used for ensuring or performing input validation and output validation by using a first method 300 and a second method 400 and
wherein input validation, invoked by,the first method 300, is performed according to a checking method 200 as shown in **Fig. 7****.**

Starting again from the example described with reference to **Figs. 1A to 1C****,** wherein a user requests the phone number of a person having first name AKISH and last name BATASH from a phone book service, an attacker may perform an attack as shown in **Figs. 7A****.** The attacker formulates a SOAP request message 111 having input parameter firstname = "AKASH'--" and input parameter lastname is empty. Before the request message is send to the web service 122, the first method 300 is called at the handler 126. As shown in **Fig. 8****,** the first method 300 checks the request message 111 (400-2). This check is performed by calling the checking method 200, i.e. input validation is performed. For the request message 111, the simple SQL injection check 210 is evaluated to false because the request message 111 does not conform to a valid or allowed request or query. In particular, the request message 111 comprises special characters " " and "--" which are not allowed in valid or syntactically correct queries. Therefore, the first method 300 creates a new SQL exception (304). Since the fault message contains an SQL exception (300-3), the first method 300 returns an exception method, that the request has been failed to be processed (306).

In other words, rather than sending the (faulty) request message 111 to the service 122 to be evaluated, the handler 126 throws a fault message 123, which is subsequently further checked for output validation, i.e. a customized fault message 123 is generated by the handler 126. Before the fault message is returned to the client 110, a second method 400 is called by the handler 126 for purpose of output validation. The second method 400 is called in order to remove SQL-related comments and expressions from the fault message 123. That is, if the fault message 123 comprises an SQL exception (400-1), the SQL-related comments and data are removed from the fault message 123 (402). Subsequently, the now customized fault message 123 is send back to the client 110 as shown in Fig. 7B. Example pseudo code implementations of the first method 300 and the second method 400 are given below.

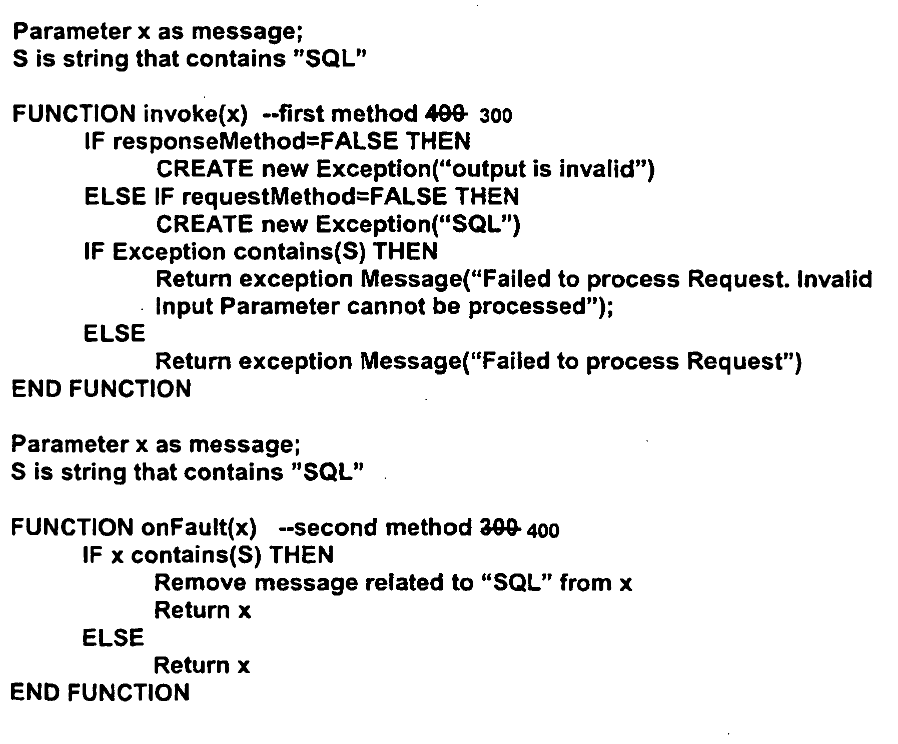

In other words, during input validation the handler 126 checks the one or more input parameters of the request message 111 and generates an exception (i.e. a fault message 123) comprising the information that the request message 111 comprises "Invalid input parameter" (306) by using the first method 300. In order to avoid any SQL-related data and information in the fault message 123, during output validation the handler 126 uses a second method 400 which removes all SQL-related data from the fault message 123.

Consequently, an attacker can not gain or receive any information about the inner structure of the web service 122. Using the handler 126 having the first method 300 and the second method 400, firstly, one or more input parameters of a request message 111 are checked. Furthermore, possibly thrown SQL exceptions are removed from a fault response message 123 such that the attacker gets no internal information, as it is however the case in the not-checked response message 11 shown in **Fig. 2B****.**

In some cases a connection between a web service 122 and a database 124 might fail for a reason which is not necessarily linked with an attack. Thus, also a response message 121 generated on response to a valid or allowed request message 111 (i.e. checked for possible simple, complex, and/or compound injections during input validation) may be invalid (e.g. may comprise SQL-related exception data). Therefore, the response message 121 is also filtered through the handler 126 during output validation. In one implementation, this is done by using the first method 300. The handler 126 calls the first method 300 before sending the response message 121 back to the client 110. If the connection is broken and the web service 122 has generated a response message 121 comprising a database exception such as an SQL exception, i.e. if the response message 111 is false (300-1), a new exception for an invalid output is generated (302). Furthermore, the handler 126 calls the second method 400 to customized the response message 121 (400-1) such that a corresponding customized response message 123 does not comprise content related to SQL exceptions, comments, and/or statements.

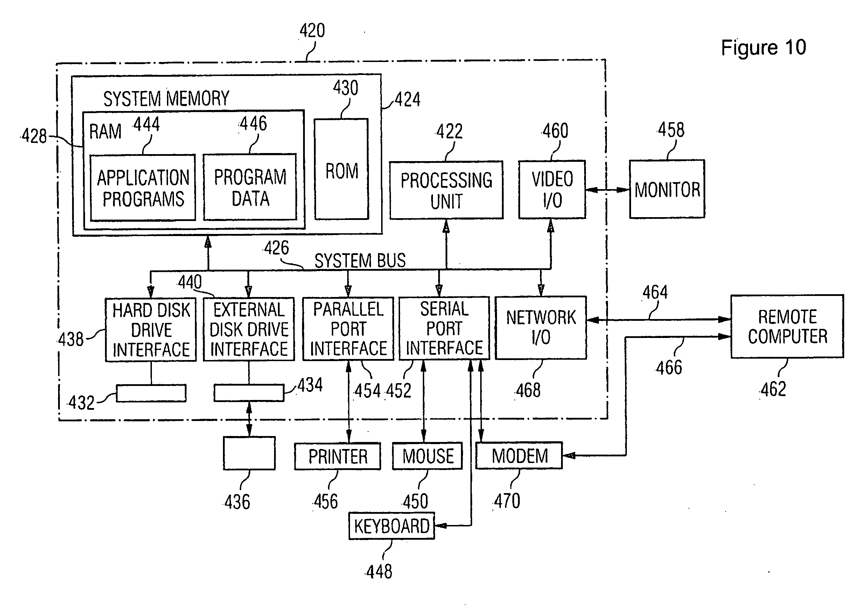

With reference to **Fig. 10****,** an exemplary system for implementing the application includes a general purpose computing device in the form of a conventional computing environment 420 (e.g. personal computer), including at least one processing unit 422 a system memory 424, and a system bus 426, that couples various system components including the system memory 424 to the processing unit 422. The processing unit 422 may perform arithmetic, logic and/or control operations by accessing system memory 424. The system memory 424 may store information and/or instructions for use in combination with processing unit 422. The system memory 424 may include volatile and non-volatile memory, such as random access memory (RAM) 428 and read only memory (ROM) 430. A basic input/output system (BIOS) containing the basic routines that helps to transfer information between elements within the personal computer 420, such as during start-up, may be stored in ROM 430. The system bus 426 may be any of several types of bus structures including a memory bus or memory controller, a peripheral bus, and a local bus using any of a variety of bus architectures.

The personal computer 420 may further include a hard disk drive 432 for reading from and writing to a hard disk (not shown), and an external disk drive 434 for reading from or writing to a removable disk 436. The removable disk may be a magnetic disk for a magnetic disk driver or an optical disk such as a CD ROM for an optical disk drive. The hard disk drive 434 and external disk drive 434 are connected to the system bus 426 by a hard disk drive interface 438 and an external disk drive interface 440, respectively. The drives and their associated computer-readable media provide nonvolatile storage of computer readable instructions, data structures, program modules and other data for the personal computer 420. The data structures may include relevant data of the implementation of the alternating processing method for processing an incoming message stream 30, as described in greater detail above. The relevant data may be organized in a database, for example a relational or object database.

Although the exemplary environment described herein employs a hard disk (not shown) and an external disk (not shown), it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk 432, external disk, ROM 430 or RAM 428, including an operating system (not shown), one or more application programs 444, other program modules (not shown), and program data 446. The application programs may include at least a part of the functionality as detailed in **Figs. 1 to** 9.

A user may enter commands and information, as discussed below, into the personal computer 420 through input devices such as keyboard 448 and mouse 450. Other input devices (not shown) may include a microphone (or other sensors), joystick, game pad, scanner, or the like. These and other input devices may be connected to the processing unit 422 through a serial port interface 452 that is coupled to the system bus 426, or may be collected by other interfaces, such as a parallel port interface 454, game port or a universal serial bus (USB). Further, information may be printed using printer 456. The printer 456, and other parallel input/output devices may be connected to the processing unit 422 through parallel port interface 454. A monitor 458 or other type of display device is also connected to the system bus 426 via an interface, such as a video input/output 460. In addition to the monitor, computing environment 420 may include other peripheral output devices (not shown), such as speakers or other audible output.

The computing environment 420 may communicate with other electronic devices such as a computer, telephone (wired or wireless), personal digital assistant, television, or the like. To communicate, the computer environment 420 may operate in a networked environment using connections to one or more electronic devices. **Fig. 10** depicts the computer environment networked with a remote computer 462. The remote computer 462 may be another computing environment such as a server, a router, a network PC, a peer device or other common network node, and may include many or all of the elements described above relative to the computing environment 420. The logical connections depicted in **Fig. 10** include a local area network (LAN) 464 and a wide area network (WAN) 466. Such networking environments are commonplace in offices, enterprise-wide computer networks, intranets and the Internet.

When used in a LAN networking environment, the computing environment 420 may be connected to the LAN 464 through a network I/O 468. When used in a WAN networking environment, the computing environment 420 may include a modem 470 or other means for establishing communications over the WAN 466. The modem 470, which may be internal or external to computing environment 420, is connected to the system bus 426 via the serial port interface 452. In a networked environment, program modules depicted relative to the computing environment 420, or portions thereof, may be stored in a remote memory storage device resident on or accessible to remote computer 462. Furthermore other data relevant to the application of the method for input validation and output validation preventing SQL injections (described above) may be resident on or accessible via the remote computer 462. The data may be stored for example in an object or a relation database. It will be appreciated that the network connections shown are exemplary and other means of establishing a communications link between the electronic devices may be used.

The above-described computing system is only one example of the type of computing system that may be used for input validation and output validation preventing SQL injections

### List of Reference Numerals

- 10; 110: client
- 20; 120: server
- 22; 122: service
- 24, 124: resource
- 40; 140: network
- 12; 34; 111, 113: request message
- 14, 27; 121, 123: response message
- 21: query generator
- 23: database query
- 25: query result
- 30: attacker
- 31: read message
- 33: change parameter
- 35: get result
- 126: handler
- 200: method to check injections
- 210: method to check simple injections
- 212, 222, 224: methods
- 210-1 to 210-4, 212-1; 222-1 to 222-3,:
- 224-1 to 224-3; 230-1 to 230-6;:
- 300-1 to 300-3, 400-1: program conditions
- 240, 250; 302, 304, 306, 308; 402, 404: program results
- 220: method to check complex injections
- 230: method to check compound injections
- 300: first method
- 400: second method
- 420: conventional computing environment
- 422: processing unit
- 424: system memory
- 426: system bus
- 428: random access memory (RAM)
- 430: read only memory (ROM)
- 432: hard disk drive
- 434: external disk drive
- 436: removable disk
- 438: hard disk drive interface
- 440: external disk drive interface
- 444: one or more application programs
- 446: program data
- 448: keyboard
- 450: mouse
- 452: serial port interface
- 454: parallel port interface
- 456: printer
- 458: monitor
- 460: video input/output
- 462: remote computer
- 464: local area network (LAN)
- 466: wide area network (WAN)
- 468: network I/O
- 470: a modem

## Claims

1. Computer-implemented method for input validation and output validation to prevent SQL injections, the method comprising:
receiving at a service (122) a request message (111) from a client (110) over a network (140), wherein the service (122) is located on a server (120);
providing a handler (126) at the server (120);
checking the request message (111) at the handler (126) using a first method (300) before sending the request message (111) to the service (122); and
checking a response message (121) at the handler (126) using the first method (300) before sending the response message (121) to the client (110);
wherein checking the request message (111) at the handler (126) further comprises:
if the request message (111) is free from injected data, passing the request message (111) to the service (122);or
throwing a request fault message (123);
if the response message (121) is free from exception data, passing it to the client (110); or
throwing a response fault message (123);
wherein throwing the request fault message and/or the response fault message (123) comprises:
checking the request fault message and/or the response fault message (123) at the handler (126) using a second method (400);
generating a customized fault message (123-1) by removing (402) SQL-related comments and expressions from the fault messages (123); and
sending the customized fault message (123-1) to the client (110).

2. Method according to claim 1, wherein checking the request message (111) at the handler (126) comprises:
checking simple attacks (210);
checking complex attacks (220); and
checking compound attacks (230).

3. Method according to any one of the preceding claims, further comprising:
filtering the request fault message and/or the response fault message (123) in the second method (400) of the handler (126) and inside the first method (300).

4. Computer program product comprising computer readable instructions, which when loaded and run in a computer and/or computer network system, causes the computer system and/or the computer network system to perform operations according to a method of anyone of the preceding claims.

5. Computer system for input validation and output validation to prevent SQL injections, the system comprising:
a server (120), the server comprising a service (122) and a handler (126),
wherein the service (122) is operable to receive a request message (111) from a client (110) over a network (140); and
wherein the handler (126) is operable to:
check the request message (111) using a first method (300) before sending the request message (111) to the service (122); and
check a response message (121) using the first method (300) before sending the response message (121) to the client (110);
wherein the handler (126) is further operable to:
pass the request message (111) to the service (122) if the request message (111) is free from injected data; or
throw a request fault message (123);
wherein the handler (126) is further operable to:
pass the response message (121) to the client (110) if the response message (121) is free from exception data; or
throw a response fault message (123);
check the request fault message and/or the response fault message (123) using a second method (400);
generate a customized fault message (123-1) removing (402) SQL-related comments and expressions from the fault messages (123); and
send the customized fault message (123-1) to the client (110).

6. System according to claim 5, wherein the handler (126) is further operable to use the first method (300) to:
check simple attacks (210);
check complex attacks (220); and
check compound attacks (230).

7. System according to claim 5 or 6, wherein the handler (126) is further operable to:
filter the request fault message and/or the response fault message (123) in the second method (400) of the handler (126) and inside the first method (300).

## Patentansprüche

1. Computerimplementiertes Verfahren zur Eingabevalidierung und Ausgabevalidierung, um SQL-Injections bzw. -Einschleusungen zu verhindern, wobei das Verfahren umfasst:
Empfangen, an einem Dienst (122), eine Anfragenachricht (111) von einem Kunden bzw. Client (110) über ein Netzwerk (140), wobei sich der Dienst (122) auf einem Server (120) befindet;
Bereitstellen eines Handlers (126) an dem Server (120);
Überprüfen der Anfragenachricht (111) an dem Handler (126) unter Verwendung eines ersten Verfahrens (300), bevor die Anfragenachricht (111) an den Dienst (122) gesendet wird; und
Überprüfen einer Antwortnachricht (121) an dem Handler (126) unter Verwendung des ersten Verfahrens (300), bevor die Antwortnachricht (121) an den Client (110) gesendet wird;
wobei das Überprüfen der Anfragenachricht (111) an dem Handler (126) ferner umfasst:
wenn die Anfragenachricht (111) frei von eingeschleusten Daten ist, Leiten der Anfragenachricht (111) an den Dienst (122); oder
Ausgeben einer Anfrage-Fehlermeldung (123);
wenn die Antwortnachricht (121) frei von Ausnahmedaten bzw. Exception Data ist, Leiten derselben an den Client (110); oder
Ausgeben einer Antwort-Fehlermeldung (123);
wobei das Ausgeben der Anfrage-Fehlermeldung und/oder der Antwort-Fehlermeldung (123) umfasst:
Überprüfen der Anfrage-Fehlermeldung und/oder der Antwort-Fehlermeldung (123) an dem Handler (126) unter Verwendung eines zweiten Verfahrens (400);
Generieren einer kundenindividuellen Fehlermeldung (123-1) durch Entfernen (402) von SQL-bezogenen Anmerkungen und Ausdrücken aus den Fehlermeldungen (123); und
Senden der kundenindividuellen Fehlermeldung (123-1) an den Client (110).

2. Verfahren nach Anspruch 1, wobei das Überprüfen der Anfragenachricht (111) an dem Handler (126) umfasst:
Überprüfen einfacher Angriffe (210);
Überprüfen komplexer Angriffe (220); und
Überprüfen zusammengesetzter bzw. gemischter Angriffe (230).

3. Verfahren nach einem der vorhergehenden Ansprüche, ferner umfassend:
Filtern der Anfrage-Fehlermeldung und/oder der Antwort-Fehlermeldung (123) in dem zweiten Verfahren (400) des Handlers (126) und innerhalb des ersten Verfahrens (300).

4. Computerprogrammprodukt umfassend computerlesbare Instruktionen, das, wenn es in einem Computer und/oder Computernetzwerksystem geladen ist und ausgeführt wird, das Computersystem und/oder das Computernetzwerksystem veranlasst, Operationen gemäß eines Verfahrens nach einem der vorhergehenden Ansprüche durchzuführen.

5. Computersystem zur Eingabevalidierung und Ausgabevalidierung, um SQL-Injections bzw. -Einschleusungen zu verhindern, wobei das System umfasst:
einen Server (120), wobei der Server einen Dienst (122) und einen Handler (126) umfasst,
wobei der Dienst (122) betriebsfähig ist, um eine Anfragenachricht (111) von einem Kunden bzw. Client (110) über ein Netzwerk (140) zu empfangen; und
wobei der Handler (126) betriebsfähig ist zum:
Überprüfen der Anfragenachricht (111) unter Verwendung eines ersten Verfahrens (300), bevor die Anfragenachricht (111) an den Dienst (122) gesendet wird; und
Überprüfen einer Antwortnachricht (121) unter Verwendung des ersten Verfahrens (300), bevor die Antwortnachricht (121) an den Client (110) gesendet wird;
wobei der Handler (126) ferner betriebsfähig ist zum:
Leiten der Anfragenachricht (111) an den Dienst (122), wenn die Anfragenachricht (111) frei von eingeschleusten Daten ist; oder
Ausgeben einer Anfrage-Fehlermeldung (123);
wobei der Handler (126) ferner betriebsfähig ist zum:
Leiten der Antwortnachricht (121) an den Client (110), wenn die Antwortnachricht (121) frei von Ausnahmedaten bzw. Exception Data ist; oder
Ausgeben einer Antwort-Fehlermeldung (123);
Überprüfen der Anfrage-Fehlermeldung und/oder der Antwort-Fehlermeldung (123) unter Verwendung eines zweiten Verfahrens (400);
Generieren einer kundenindividuellen Fehlermeldung (123-1) durch Entfernen (402) von SQL-bezogenen Anmerkungen und Ausdrücken aus den Fehlermeldungen (123); und
Senden der kundenindividuellen Fehlermeldung (123-1) an den Client (110).

6. System nach Anspruch 5, wobei der Handler (126) ferner betriebsfähig ist, um das erste Verfahren (300) zu verwenden zum:
Überprüfen einfacher Angriffe (210);
Überprüfen komplexer Angriffe (220); und
Überprüfen zusammengesetzter bzw. gemischter Angriffe (230).

7. System nach Anspruch 5 oder 6, wobei der Handler (126) ferner betriebsfähig ist zum:
Filtern der Anfrage-Fehlermeldung und/oder der Antwort-Fehlermeldung (123) in dem zweiten Verfahren (400) des Handlers (126) und innerhalb des ersten Verfahrens (300).

## Revendications

1. Procédé implémenté par un ordinateur pour la validation d'entrées et la validation de sorties afin d'éviter des injections SQL, le procédé comprenant:
recevoir sur un service (122) un message de requête (111) depuis un client (110) par un réseau (140), dans lequel le service (122) est placé sur un serveur (120);
fournir un gestionnaire (126) sur le serveur (120);
vérifier le message de requête (111) sur le gestionnaire (126) utilisant une première méthode (300) avant l'envoi du message de requête (111) au service (122); et
vérifier un message de réponse (121) sur le gestionnaire (126) utilisant une première méthode (300) avant l'envoi du message de réponse (121) au client (110);
dans lequel la vérification du message de requête (111) sur le gestionnaire (126) comprend en outre:
la transmission du message de requête (111) au service (122) si le message de requête (111) est exempt de données injectées; ou
émettre un message de défaut de requête (123);
si le message de réponse (121) est exempt de données d'exception, sa transmission au client (110); ou
émettre un message de défaut de réponse (123);
dans lequel l'émission du message de défaut de requête et/ou du message de défaut de réponse (123) comprend:
vérifier le message de défaut de requête et/ou le message de défaut de réponse (123) sur le gestionnaire (126) utilisant une seconde méthode (400);
générer un message de défaut sur mesure (123-1) en retirant (402) des expressions et
des commentaires associés au SQL depuis les messages de défaut (123); et
envoyer le message de défaut sur mesure (123-1) au client (110);

2. Procédé selon la revendication 1, dans lequel la vérification du message de requête (111) sur le gestionnaire (126) comprend:
vérifier des attaques simples (210);
vérifier des attaques complexes (220); et
vérifier des attaques composites (230).

3. Procédé selon l'une quelconque des revendications précédentes, comprenant en outre:
filtrer le message de défaut de requête et/ou le message de défaut de réponse (123) dans la seconde méthode (400) du gestionnaire (126) et dans la première méthode (300).

4. Produit de programme d'ordinateur comprenant des instructions lisibles par un ordinateur qui, lorsqu'elles sont chargées et tournent sur un système d'ordinateurs et/ou un système de réseau d'ordinateurs, provoquent que le système d'ordinateurs et/ou le système de réseau d'ordinateurs accomplisse des opérations selon un procédé d'une quelconque des revendications précédentes.

5. Système d'ordinateurs pour la validation d'entrées et la validation de sorties afin d'éviter des injections SQL, le système comprenant:
un serveur (120), le serveur comprenant un service (122) et un gestionnaire (126),
dans lequel le service (122) est opérable pour recevoir un message de requête (111) depuis un client (110) par un réseau (140); et
dans lequel le gestionnaire (126) est opérable pour:
vérifier le message de requête (111) utilisant une première méthode (300) avant l'envoi du message de requête (111) au service (122); et
vérifier un message de réponse (121) utilisant la première méthode (300) avant l'envoi du message de réponse (121) au client (110);
dans lequel le gestionnaire (126) est en outre opérable pour:
transmettre le message de requête (111) au service (122) si le message de requête (111) est exempt de données injectées; ou
émettre un message de défaut de requête (123);
dans lequel le gestionnaire (126) est en outre opérable pour:
transmettre le message de réponse (121) au client (110) si le message de réponse (121) est exempt de données d'exception; ou
émettre un message de défaut de réponse (123);
vérifier le message de défaut de requête et/ou le message de défaut de réponse (123) utilisant une seconde méthode (400);
générer un message de défaut sur mesure (123-1) qui retire (402) des expressions et des commentaires associés au SQL depuis les messages de défaut (123); et envoyer le message de défaut sur mesure (123-1) au client (110).

6. Système selon la revendication 5, dans lequel le gestionnaire (126) est en outre opérable pour:
vérifier des attaques simples (210);
vérifier des attaques complexes (220); et
vérifier des attaques composites (230).

7. Système selon la revendication 5 ou 6, dans lequel le gestionnaire (126) est en outre opérable pour:
filtrer le message de défaut de requête et/ou le message de défaut de réponse (123) dans la seconde méthode (400) du gestionnaire (126) et dans la première méthode (300).
